(19)

Europäisches
Patentamt
European
Patent Office
Office européen
des brevets

(11) **EP 2 734 755 B1**

(12) **EUROPEAN PATENT SPECIFICATION**

(45) Date of publication and mention
of the grant of the patent:
**16.09.2015 Bulletin 2015/38**

(21) Application number: **12742835.7**

(22) Date of filing: **19.07.2012**

(51) Int Cl.:
**F16J 15/32** *(2006.01)*      **G01B 21/08** *(2006.01)*

(86) International application number:
**PCT/EP2012/064169**

(87) International publication number:
**WO 2013/011086 (24.01.2013 Gazette 2013/04)**

(54) **METHOD OF DETERMINING WHEN A CRITICAL FILM THICKNESS WILL BE REACHED IN A GREASE-LUBRICATED SEAL**

VERFAHREN ZUR BESTIMMUNG DER ERREICHUNG EINER KRITISCHEN FILMDICKE BEI EINER FETTGESCHMIERTEN DICHTUNG

PROCÉDÉ PERMETTANT DE DÉTERMINER À QUEL MOMENT UNE ÉPAISSEUR DE FILM CRITIQUE EST ATTEINTE DANS UN JOINT D'ÉTANCHÉITÉ LUBRIFIÉ À LA GRAISSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2011 PCT/EP2011/062489**

(43) Date of publication of application:
**28.05.2014 Bulletin 2014/22**

(73) Proprietor: **Aktiebolaget SKF**
**41 550 Göteborg (SE)**

(72) Inventors:
• **BAART, Pieter**
**NL-1851 VG Heiloo (NL)**

• **VAN ZOELEN, Marco**
**NL-3994 HK Houten (NL)**
• **LUGT, Piet**
**NL-4132 BB Vianen (NL)**

(74) Representative: **Burö, Sven Peter et al**
**Kelvinbaan 16**
**3439MT Nieuwegein (NL)**

(56) References cited:
**EP-A1- 2 138 744**

• **DEKKER M: "SHAFT SEALS FOR DYNAMIC APPLICATIONS", N/A, 1 January 1996 (1996-01-01), XP000847539, cited in the application**

**Description**

**Field of the invention**

The present invention relates to a method of predicting when an oil film between an axial seal lip and a counterface, being in sliding contact with each other, will reach a critical thickness value that is insufficient to adequately separate the sliding contact. The invention further relates to a condition monitoring system adapted to implement the method and to a seal life estimator that estimates seal life on the basis of calculating when the critical film thickness will be reached.

**Background**

Bearing seals with multiple contacting seal lips are lubricated with grease in order to reduce friction and wear, and improve sealing performance. The grease provides oil to the sealing contact and an oil film separates the sliding surfaces. The replenishment mechanisms of lubricating greases are very different from those of oils due to the semi-solid behaviour of grease. Unlike oil, grease may not freely flow to the sealing contact, limiting the amount of lubricant supply for lubrication. The supply of oil to the contact is therefore limited by the volume of grease that is actually available for bleeding oil. This volume of grease is typically referred to as the grease reservoir. The supply of oil to the sealing contact is further limited by the oil bleeding characteristics of the grease. It has been found that the oil bleed rate increases with temperature and strongly depends on the grease type. Baart et al. presented a one-dimensional physical model for predicting the oil bleed from the grease - 'Oil-bleeding model for lubricating grease based on viscous flow through a porous microstructure', Trib. Trans., 2010, 53, p. 340-348.

When the grease reservoir is no longer able to supply an amount of oil that adequately separates the seal lip and the counterface, friction, wear and loss of sealing function quickly occur. In conventional systems for monitoring sealing function, one or more specific parameters are typically measured and a critical value is defined for the one or more specific parameters. For example, temperature that is indicative of friction may be measured close to the sealing contact. When the measured value equals or exceeds a predefined maximum temperature, a warning might be triggered that the seal needs to be replaced. In other known systems, the seal is fitted with a leakage sensor that detects the presence of oil an air side of the sealing lip. Again, a warning is sent when an amount is detected that exceeds a predefined threshold.

Known systems are based on detecting faults or failures after they have occurred. The risk associated with such systems is that when the fault or failure is detected, damage to the sealed component has already taken place. Consequently, there is a need for a method of predicting when loss of sealing function will occur and for a system that implements the method. The document "Shaft seals for dynamic applications", Dekker M., 1996, pages 338-339, shows the features of the preamble of claims 1 and 14.

**Invention summary**

The present invention is based on an improved understanding of the available grease reservoir for an axially-oriented sealing lip, in combination with an oil bleed model that is applicable for seals with such an axial contact lip. The inventors have found that it is grease held on a rotating part of the seal, which predominantly acts as the grease reservoir for supplying oil to the contact. Further, the inventors have succeeded in modeling the supply of oil to the contact and loss of oil from the contact, to predict the film thickness as a function of time.

In a first aspect, the present invention provides a method of determining a time, $t_c$, at which an oil film separating a sliding contact interface between a counterface and an axial lip of a seal will reach a critical film thickness. One of the axial lip and the counterface is provided on a rotational part of the seal and the other of the axial lip and the counterface is provided on a non-rotational part of the seal. Further, the seal is grease lubricated and the oil film is formed by base oil, which bleeds from a grease reservoir on the rotational part of the seal and which flows towards the contact interface under the action of centrifugal force. According to the invention, the method comprises steps of

- determining an rotational speed of the rotational part of the seal,
- determining a viscosity of the base oil,
- determining the time, $t_c$, based on the rotational speed, the viscosity of the base oil, a cross-sectional area of the grease reservoir and a diameter of the contact interface.

The critical film thickness represents a thickness value at which the oil film is no longer capable of adequately separating the axial seal lip and the counterface, such that direct contact takes place. Without an adequate oil film, the seal lip will soon wear, leading to loss of sealing function. Suitably, the critical film thickness is a thickness equal to a surface roughness of the counterface. The method may thus further comprise a step of measuring a roughness parameter, such as $R_a$, of the counterface. The method may be advantageously implemented in, for example, a seal condition monitoring system, so that the seal can be replaced before sealing function is lost.

Specifically, the time, $t_c$, is determined according to the following relationship:

$$t_c = \left[ C_1 A_r + C_2 \right] \left[ \frac{\eta}{\left( n^2 \cdot d_s \right)} \right],$$

where

C$_1$ is a first constant dependent on grease microstructure
C$_2$ is a second constant dependent on grease microstructure
A$_r$ is the cross-sectional area of the grease reservoir (m$^2$)
$\eta$ is the viscosity of the base oil (Pa.s)
n is the rotational speed (rev.min$^{-1}$)
d$_s$ is the diameter of the contact interface (m).

Depending on the microstructure of the grease used, The constant $C_1$ may have a value of between $1.10^{10}$ and $1.10^{20}$, and the constant $C_2$ may have a value of between 0 and $1.10^{10}$.

Suitably, the step of determining viscosity comprises measuring a temperature of the seal under dynamic sealing conditions, whereby temperature is preferably measured near the sliding contact interface.

In a second aspect, the present invention provides a condition monitoring system for a grease-lubricated seal with an axial sealing lip as described above. The system is configured for implementing the method of the invention and comprises:

- means to determine the rotational speed of the seal;
- means to determine the viscosity of the base oil in the grease;
- processing means programmed to determine the time, $t_c$, based on the rotational speed, the viscosity of the base oil, a cross-sectional area of the grease reservoir and a diameter of the contact interface.

Suitably, the condition monitoring system is further configured to issue an alarm when the determined time, $t_c$, falls below a predefined minimum value.

In a further development, the grease-lubricated seal that is monitored by the system comprises a retention surface for holding a predetermined volume of grease in the grease reservoir. The retention surface is provided on the rotating part of the seal, at a location radially inward of the axial sealing lip. The retention surface is designed such that the movement of grease under the action of centrifugal force is prevented, while the movement of base oil, which bleeds from the grease reservoir, is allowed. As a result, the supply of base oil to the sealing contact can take place for a longer period of time, which extends the life of the seal. Also, the cross-sectional area of the grease reservoir can be readily estimated, given that the reservoir has a predetermined volume.

In some embodiments, the rotating part of the seal is a slinger comprising a cylindrical part and a radial flange part. In one example, the retention surface is formed by providing a bend in the flange part, which creates an overhang for retaining the volume of grease in a radial direction. Suitably, the retention surface extends in an axial direction at an angle of less than 40 degrees relative to a rotation axis of the seal. The angle of the retention surface may be adapted depending on the operating speed of the rotational part (i.e. the magnitude of the centrifugal force acting on the grease volume). For example, in low-speed applications, an angle of between 20 and 40 degrees may be used. In high-speed applications, an angle of less than 20 degrees is preferable. As a result, an axial component of the centrifugal force acting on the volume of grease is insufficient to cause sideways movement of the grease, but is sufficient to allow side-flow of base oil. In some applications, to prevent movement of the grease, the retention surface may be parallel to the axis of rotation, so that the axial component of the centrifugal force is zero. In such applications, a pressure differential created within the rotating grease is sufficient to cause side flow of the base oil.

In a second example, the reservoir comprises an overhanging lip, so that the volume of grease is retained in a radial direction and in an axial direction. The reservoir may be a separate part that is moulded to or adhesively fixed to the slinger flange. To allow the movement of base oil, the retention surface further comprises channels. The channels may be grooves provided in the lip, which allow side-flow of oil out of the reservoir. The channels may also be through-holes provided in the reservoir which allow base oil to flow in a radially outward direction.

In a still further example, the retention surface is made of a porous material, whereby the pores in the reservoir act as channels for the base oil. Preferably, the channels have a width of less than 1 mm, so that grease cannot escape from the reservoir via the channels. The number of channels and the size of the channels is selected depending on the volume of base oil that is advantageously supplied to the sealing contact.

In other embodiments, the axial lip rotates and bears against a stationary counterface. The retention surface is then suitably moulded into an elastomeric element on which the axial sealing lip is provided. The retention surface may comprise an overhanging lip and further comprise channels, as described above. Alternatively, the retention surface may be formed by a roughened surface on the elastomeric element. Again, the roughened retention surface preferably extends in an axial direction at an angle of less than 40 degrees relative to the rotation axis. In high speed applications, the angle is preferably less than 20 degrees.

In a third aspect, the present invention provides a seal life estimator for estimating an expected life of a grease-lubricated seal under dynamic sealing conditions, whereby the seal has an axial lip in sliding contact with a counterface. One of the axial lip and the counterface is provided on a rotational part of the seal and the other of the axial lip and the counterface is provided on a non-rotational part of the seal. Therefore, an oil film forms under dynamic sealing conditions, which oil film separates a sliding contact interface between the axial lip and the counterface. The oil film is formed by base oil, which bleeds from a grease reservoir on the rotational part of the seal and which flows towards the sliding contact interface under the action of centrifugal force. According to the invention, the estimator has program means configured to estimate seal life based on a time, $t_c$, at which the oil film will reach a critical thickness, where the time, $t_c$, is calculated based on a rotational speed of the rotational part of the seal, a viscosity of the base oil, a cross-sectional area of the grease reservoir and a diameter of the sliding contact interface.

Specifically, the seal life estimator is configured to calculate the time, $t_c$, according to the following relationship:

$$t_c = \left[ C_1 A_r + C_2 \right] \left[ \frac{\eta}{\left( n^2 \cdot d_s \right)} \right],$$

where

C$_1$ is a first constant dependent on grease microstructure
C$_2$ is a second constant dependent on grease microstructure
A$_r$ is the cross-sectional area of the grease reservoir (m$^2$)
$\eta$ is the viscosity of the base oil (Pa.s)
n is the rotational speed (min$^{-1}$)
d$_s$ is the diameter of the contact interface (m).

In one application, the seal life estimator is used as part of seal selection program for selecting an optimal seal for a particular application.

Thus, there are several applications where it is beneficial to estimate when the oil film that separates an axial sealing contact interface will reach a critical thickness as which inadequate separation occurs. Other advantages of the present invention will become apparent from the detailed description and accompanying drawings.

**Brief description of the drawings**

Figure 1        shows a cross-sectional view of part of a bearing seal having an axial sealing lip in contact with a counterface (a) and a grease reservoir (b).

Figs. 2a, 2b    are details showing dimensions of the axial sealing lip contact of Figure 1, with oil loss due to seal pumping (Figure 2a) and with ingested meniscus and oil loss from centrifugal body load (Figure 2b).

Figure 3        shows dimensions of the grease reservoir on the bearing seal of Figure 1, after the churning phase.

Figure 4        is a flowchart of the calculation scheme for film thickness calculation.

Figure 5        is a graph of oil film thickness against time, starting from fully flooded conditions.

Figure 6        is a graph of operating time until critical film thickness is reached against temperature, at different rotational speeds and for $A_r$ = 0.5 mm$^2$. Points are model calculation results.

Figure 7        is a graph of operating time until critical film thickness is reached against temperature, for different grease reservoir sizes and at $n$ = 1000 rpm. Points are numerical calculations.

Figure 8        is a graph of operating time until critical film thickness is reached based on the $\eta/(n^2 \cdot d_s)$ parameter for $A_r$ = 0.5 mm$^2$.

Figure 9    shows an example of a condition monitoring system according to the invention, comprising an adapted seal - part of which is shown in cross-section.

Figure 10   is a cross-sectional view of part of a further example of an adapted seal that is suitable for use in a condition monitoring system according to the invention.

**Detailed description**

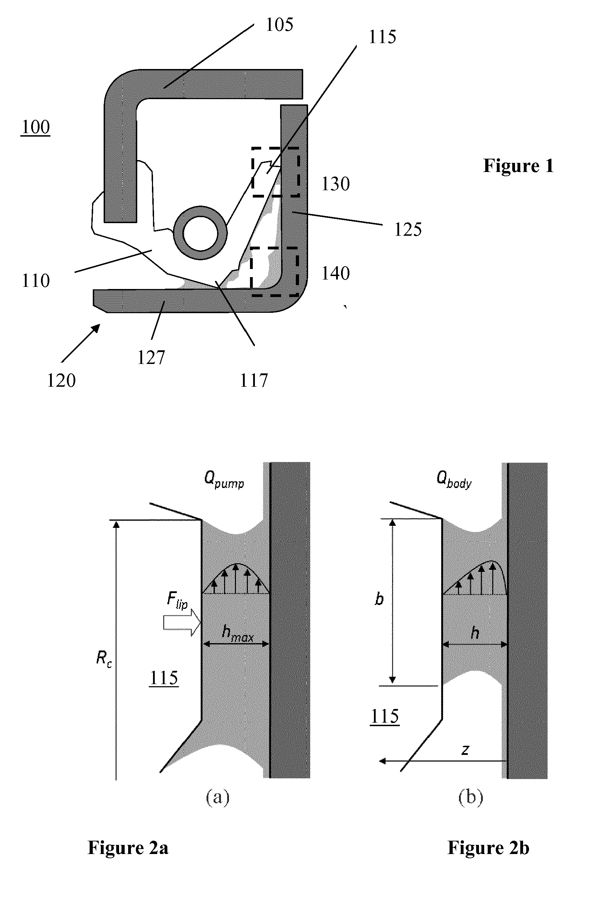

Figure 1 shows a cross-section of part of a grease-lubricated bearing seal. The seal 100 in the depicted example comprises a metal casing 105 to which an elastomeric seal body 110 is bonded, and further comprises a slinger 120. The elastomeric seal body comprises an axial lip 115, which is contact with an axial counterface on a radially extending flange part 125 of the slinger. The elastomeric seal body further has a radial lip 117, which contacts a radial counterface on an axially extending cylindrical part 127 of the slinger. The present invention is concerned with the axial sealing contact between the axial lip 115 and the slinger flange 125, which contact region is highlighted in Figure 1 by the outlined box indicated at reference numeral 130.

In grease lubricated seals, the lubrication condition, or film thickness, is assumed to be determined by the availability of lubricant near the sealing contact. Grease may form a reservoir on the seal body and/or on the counterface, depending on which part is moving. In the example of Figure 1, the seal 100 is adapted for mounting to a bearing with a rotational inner ring and a non-rotational outer ring. Therefore, in use of the seal, the slinger 120 is the rotating part and most grease will be thrown onto the stationary seal body 110. Only a relatively small amount of grease will remain on the slinger 120, which grease acts as a reservoir that will then slowly release oil for lubrication of the sealing contact. The grease reservoir is denoted in Figure 1 by the outlined box indicated at reference number 140.

The oil flow from the grease reservoir 140 is driven by the large centrifugal forces that result from the rotational movement. The stationary grease on the seal will also release oil but on a much longer timescale due to the absence of these forces. The formation of the grease reservoir depends on the amount of grease that is applied and the initial grease distribution in the volume between the seal body 110 and the counterfaces of the slinger 120. For the model presented in the following, it is assumed that after a churning phase, the grease is distributed through the volume between the elastomeric body 110 and the counterfaces and that a permanent grease reservoir is formed on the slinger 120. No creep flow, dynamics, and grease degradation are assumed to be present.

Initially a maximum film thickness in the axial sealing contact 130 is assumed, which is determined by the operating conditions and seal lip force. Subsequently, the film thickness decreases, depending on oil loss, due to seal pumping and centrifugal effects, while there will be replenishment from the grease reservoir.

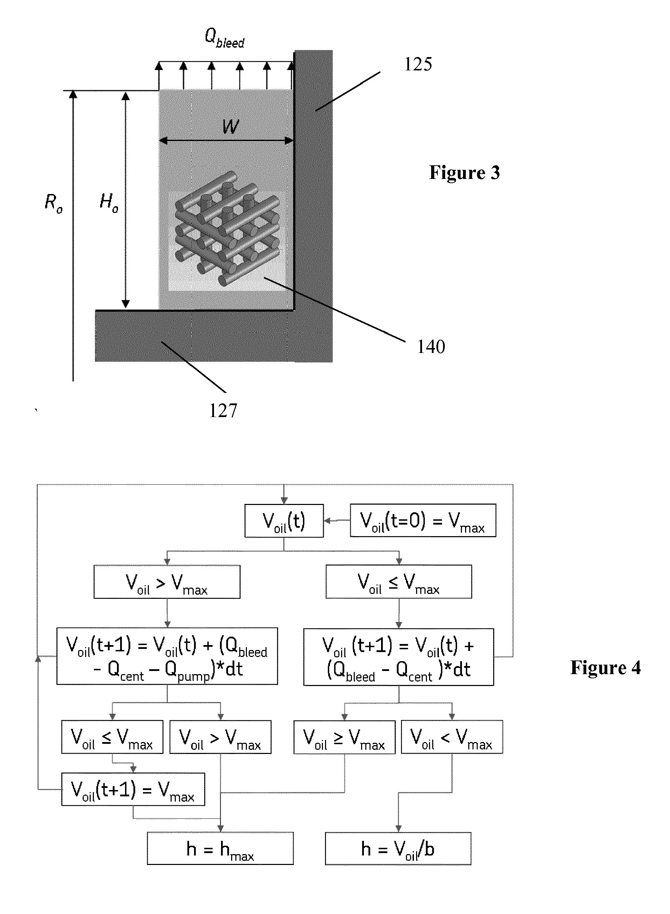

The oil feed to and oil loss from the sealing contact has been simulated to predict the film thickness inside the sealing contact 130. The oil loss from the contact takes place due to the natural pumping action of the seal and centrifugal forces acting on the oil film in a gap between the axial lip 115 and the slinger flange 125, as indicated in Figure 2a and Figure 2b respectively. Figure 3 schematically presents the oil feed due to oil bleed from the grease reservoir 140 on the rotating slinger 120. A balance between the oil feed and oil loss mechanisms determines the amount of oil in the sealing contact as

$$V_{oil} = \int_0^t \left( Q_{feed} - Q_{loss} \right) dt + V_o \tag{1}$$

where $V_{oil}$ is the volume of oil in the contact 130 as a function of time $t$ and $Q_{feed}$ and $Q_{loss}$ are the flow rates of the oil feed and oil loss respectively. The initial volume of oil in the contact is $V_o$ and results from the churning phase. Assuming a uniform oil film in the contact, the oil film thickness is defined as

$$h = \frac{\int_0^t \left( Q_{feed} - Q_{loss} \right) dt + V_o}{2\pi R_c b} \tag{2}$$

where $R_c$ is the radial position of the contact and b is the width in the contact that contains the oil as defined in Figure 2a and Figure 2b.

**Oil feed**

The specific oil feed from the grease reservoir is based on the oil bleed model presented in 'Oil-bleeding model for lubricating grease based on viscous flow through a porous microstructure', Trib. Trans., 2010, 53, p. 340-348 by Baart et al, which is incorporated herein by reference. In this model the grease is considered as a porous medium where the grease thickener forms a solid microstructure that holds the base oil inside. Due to external body forces, the oil will flow through the microstructure and bleed out at the outer radius. This approach has been based on Darcy's law, which gives the fluid velocity in its general form as

$$u = -\frac{k}{\eta}\nabla p$$
(3)

where $k$ is the permeability, $\eta$ the base oil viscosity, and $\nabla p$ the pressure gradient. The model referred to above, by Baart et al, shows how the permeability, or ability for the oil to flow through the thickener microstructure, is a function of the oil volume fraction in the grease and the orientation of the microstructure. The pressure gradient $\nabla p$ in Darcy's law can be replaced by a body force, e.g. gravity or centrifugal force. Consequently the oil flow rate or oil loss is a function of the grease microstructure, temperature, and rotational speed and in its most simple form reads

$$Q_{bleed} = -2\pi R_o W \frac{k(f)}{\eta(T)}\rho\omega^2 r \,,$$
(4)

where $R_o$ the outer radius of the grease reservoir, W is the width of the grease reservoir, f is the thickener volume fraction in the grease, $\eta$ is the oil viscosity from the Walther equation, and the body force is given by the oil density $\rho$, the angular velocity $\omega$, and the radius $r$. Characteristic dimensions of the grease reservoir are given in Figure 3. The dimensions may be estimated, based on the grease shear stress and on measurements performed on sample seals, after the churning phase. Preferably, the rotating part of the seal is designed to hold a predetermined volume of grease, which will be explained later on.

The oil bleeding, or oil supply to the sealing contact, has a maximum at the beginning and reduces as a function of time.

**Oil loss**

The oil loss from the sealing contact results from body forces on the oil film in the contact and the natural pumping action of the seal such that

$$Q_{loss} = Q_{pump} + Q_{body}$$
(5)

where $Q_{pump}$ is the oil loss from the natural pumping of the seal and $Q_{body}$ is the oil loss from body forces.

Oil loss from natural pumping of the seal is predicted using empirical equations derived from Horve in 'Shaft seals for dynamic applications' [Marcel Dekker Inc. 1996, textbook], which is incorporated herein by reference. These equations have been derived from extensive experimental work on oil lubricated radial shaft seals of which both sides are fully flooded with oil. It is assumed that the equations can also be applied to axial contacting seals. Since the seal geometry, i.e. lip angles, and seal material are not included in this model, it is assumed that the axial sealing contact in Figures 2a and 2b is equal to the seal geometry and material that Horve used. From the Horve equations, an equation for the seal pump rate is derived assuming fully flooded conditions

$$Q_{pump} = 1.04 \cdot 10^{-8} R_c^{\;3} \frac{n}{60} G^{-1/3} \,,$$
(6)

where $R_c$ is the radial position of the contact, n the shaft speed in rpm, and G the duty parameter given as

$$G = 2\pi b \frac{n}{60}\frac{\eta}{F_{lip}} \,,$$
(7)

where $F_{lip}$ is the specific lip force. The film thickness can also be calculated from the Horve equations. This is the film thickness at fully flooded conditions and consequently the maximum film thickness possible as:

$$h_{\max} = 0.011 R_c G^{5/9} .$$

(8)

The natural pumping equation and maximum film thickness equation from Horve are only valid when the seal is fully flooded. Other work has shown that as soon as all the oil is pumped from the air side to the oil side of the seal, the oil meniscus will ingest into the sealing contact as indicated in Figure 2b. When this happens, pumping due to the asymmetric pressure distribution will no longer take place. This hypothesis has been proven through numerical simulation, demonstrating that even multiple equilibrium positions for the meniscus exist. Consequently the seal will not continue pumping oil. The volume of oil that is subsequently present in the sealing contact is given as

$$V_{\max} = 2\pi R_c b h_{\max} ,$$

(9)

where b is the width of the oil volume when the meniscus is ingested and $h_{max}$ is the maximum film thickness as in fully flooded conditions. This volume $V_{max}$ is considered as the maximum volume of oil in the contact below which the seal no longer pumps oil according to Eq. (6). Oil loss from seal pumping is dominating when the oil volume in the contact is $V_{oil} > V_{max}$. When $V_{oil} < V_{max}$ then seal pumping is no longer present and oil loss only takes place due to the centrifugal forces on the oil film in the sealing contact. Figure 2a and 2b graphically define these lubrication conditions and corresponding contact dimensions.

Assuming a linear velocity profile over the film thickness in circumferential direction, the centrifugal forces on the oil film vary from zero on the stationary seal surface, where $z = 0$, to the maximum value on the rotating flinger surface, where $z = h$. The specific body force then becomes

$$F_{body} = \rho \left( \omega \frac{z}{h} \right)^2 r ,$$

(10)

where $p$ the oil density, $\omega$ the angular shaft velocity and $r$ the radial position. Considering a thin layer, the body force induces shear flow defined by

$$\eta \frac{d^2 u_r}{dz^2} = -\rho \left( \omega \frac{z}{h} \right)^2 r ,$$

(11)

where $u_r$ is the flow velocity in radial direction, Because the width b is small compared to the contact radius $R_c$, it can be assumed that the radial flow velocity is constant through the contact width such that $r$ in Eq. (11) can be replaced by $R_c$. Eq. (11) can be integrated twice and after applying the boundary conditions where $u_r = 0$ at the walls, the radial velocity $u_r$ is then found as

$$u_r(z) = -\frac{\rho \omega^2 z R_c}{12 \eta h^2} \left( h^3 - z^3 \right)$$

(12)

Integrating Eq. (12) over the gap height and multiplying with the contact circumference gives the oil loss from body forces as

$$Q_{body} = 2\pi R_c \frac{\rho \omega^2 R_c}{40 \eta} h^3$$

(13)

The oil loss $Q_{body}$ will result in a reduction of the lubricant film thickness in the seal contact keeping the width b constant.

To summarize the theoretical model, three phases of operating conditions can be identified.

- Phase 1: In the churning phase the grease is being churned and the grease reservoirs are formed. The film thickness in the contact is equal to the maximum film thickness $h_{max}$.
- Phase 2: Oil bleed from the grease reservoir supplies oil to the sealing contact. At the same time oil is lost from the contact due to centrifugal forces and seal pumping as long as fully flooded conditions remain as in Figure 2a.
- Phase 3: The maximum film thickness cannot be maintained due to insufficient replenishment of the contact. The oil meniscus is ingested into the sealing contact and seal pumping stops as in Figure 2b. Oil loss from the contact is continued due to the body forces and the film thickness decreases slowly in time.

To predict the film thickness in time, Eq. (2) is numerically integrated according to the calculation scheme in Figure 4, where the different phases are included. Here the two conditions as described in phase 2 and phase 3, and shown in Figures 2a and 2b, can be identified.

*Results*

A prediction of the oil film thickness in the axial sealing contact of a specific bearing seal and grease type at different operating conditions is made using the parameters presented in Table 1. Parameters related to the grease properties are taken from Baart et al, which apply for a lithium complex grease with mineral base oil, as used in their study. Other parameters are related to the seal design in Figure 1 and Figures 2a and 2b and the seal pumping parameters from Horve.

Table 1 Parameter values for the grease and seal design.

| | | |
|---|---|---|
| $A_r$ | $0.5 \cdot 10^{-6}$ | $m^2$ |
| $b$ | $0.4 \cdot 10^{-3}$ | m |
| $D_f$ | $0.2 \cdot 10^{-6}$ | m |
| $F_{Lip}$ | 20 | N/m |
| $f_o$ | 0.26 | - |
| $H_o/W$ | 2 | - |
| $R_c$ | $44 \cdot 10^{-3}$ | m |
| $R_o$ | $42 \cdot 10^{-3}$ | m |
| $\eta_{40}$ | 0.10 | Pa s |
| $\eta_{100}$ | 0.011 | Pa s |
| $\rho$ | 900 | $Kg/m^3$ |

To evaluate the influence of the operating temperature, rotational speed and grease reservoir, the model is used to calculate the time until a critical film thickness $h_{crit} = 0.25$ $\mu$m, equal to the counterface surface roughness ($R_a$), is reached. The critical film thickness may be used as an indication for the transition from the full film lubrication to the mixed lubrication regime where some direct contact between the seal and counterface may occur.

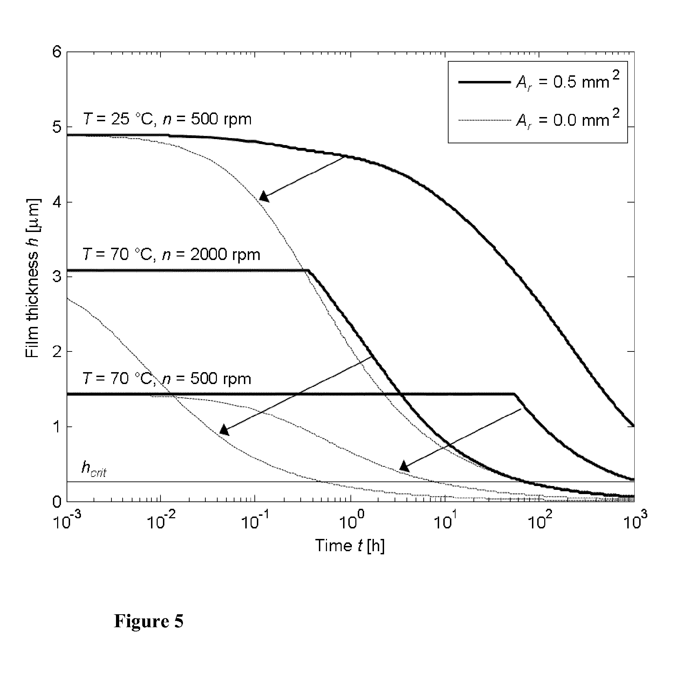

Figure 5 shows the predicted film thickness as a function of time and operating conditions including and excluding a grease reservoir with a cross-sectional area $A_r$. The cross-sectional area is obtained by multiplying the width W of the grease reservoir 140 by the height $H_o$ (refer Figure 3). The maximum film thickness depends on the rotational speed and temperature, i.e. the base oil viscosity. In the case that a grease reservoir is present, i.e. $A_r = 0.5$ mm$^2$, for a limited amount of time, the maximum film thickness remains constant before it decreases due to the limited replenishment of the sealing contact. The curves for the two speeds at 70 °C show that at lower speeds the maximum film thickness is present for a much longer time since at high speed the oil loss from the sealing contact is much higher. Figure 5 also shows the predicted film thickness without the presence of a grease reservoir ($A_r = 0$). Here the film thickness starts to decrease instantaneously and it takes significantly shorter time to reach the critical film thickness. For example at 70 °C and 2000 rpm it takes with the grease reservoir about 80 h to reach the critical film thickness of 0.25 $\mu$m and without the grease reservoir only 0.5 h.

In Figure 5 the cases that include a grease reservoir all start with the same grease reservoir size. In reality the formation of the grease reservoir during the churning phase will also depend on the operating conditions and it is likely that a smaller grease reservoir is formed at higher temperatures and higher speeds. Consequently, the difference between the two curves at a constant temperature of 70 °C will be even more pronounced. The initial grease fill and the distribution of the grease in the sealing system are therefore of crucial importance for the formation of the grease reservoir and the total amount of oil that can be available for lubrication. In the model, a temperature increase only results in a reduction of the base oil viscosity. Consequently, equal model results, i.e. equal film thickness, can be obtained when at higher temperature grease with higher viscosity base oil is used such that the effective base oil viscosity in unchanged.

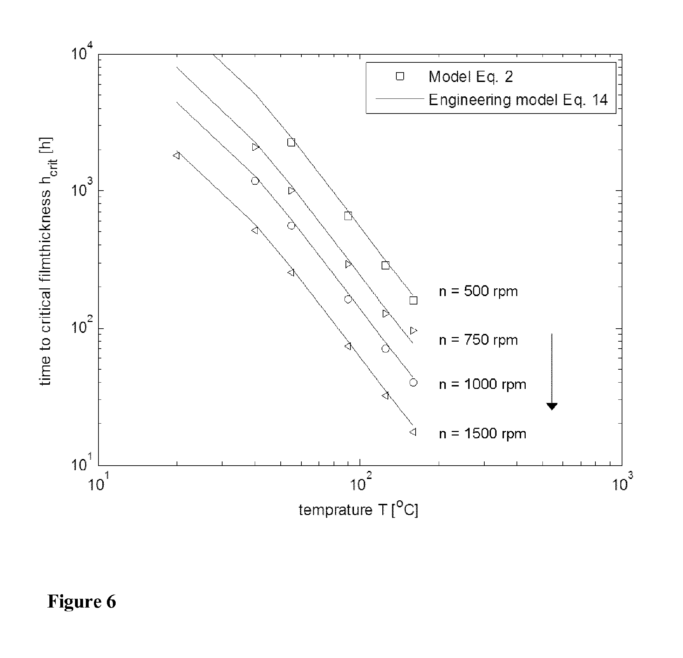

Figure 6 shows the time until the critical film thickness is reached for several operating conditions. Here the symbols represent the model results from Eq. (2). The results show how the critical time is a function of temperature for different rotational speeds and a fixed grease reservoir size.

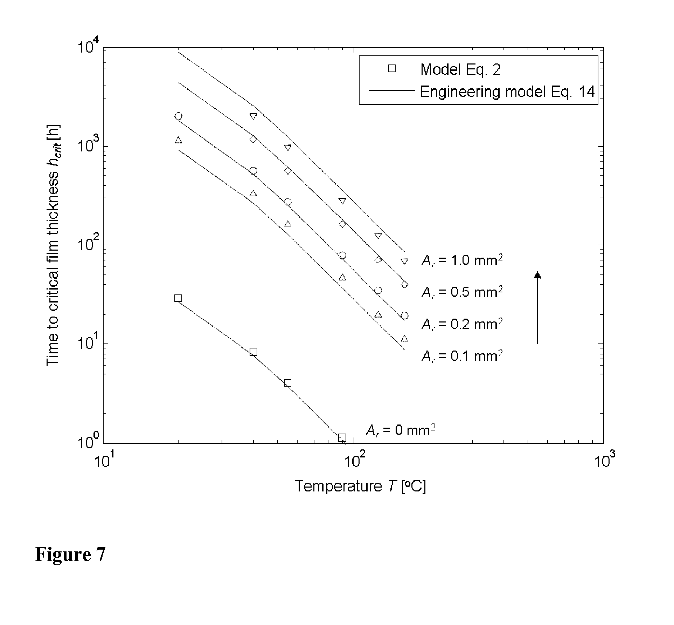

Figure 7 shows that this critical time can be significantly extended when a larger initial grease reservoir is present, provided that $H_o/W = 2$, at fixed rotational speed.

The lines in Figure 6 and Figure 7 represent a fit to the results of the physical model in Eq. (2). This fit can be used as a simple engineering model which is based on some characteristic parameters. In both the oil bleeding model in Eq. (4) and the oil loss model in Eq. (13) the influence of the oil viscosity, rotational speed and seal contact radius on the flow rate is given as $(\omega \cdot R_c)^2/\eta$ provided that $R_o \sim R_c$. Here the $\omega \cdot R_c$ is very similar to the $n \cdot d_m$ term, where n is the rotational speed in rpm and $d_m$ is the mean diameter as commonly used in the modelling of rolling element bearings. Similar parameters are used to define a characteristic term $\eta/(n^2 \cdot d_s^2)$ where $d_s = 2 \cdot R_c$ is the diameter of the sealing contact. According to the film thickness equation in Eq. (2) this term has to be divided by the contact radius giving $\eta/(n^2 \cdot d_s)$ and is used as de basis for the engineering model. Here also the influence of the size of the grease reservoir is included which has been presented in Figure 7. Including two fitting constants the engineering model reads

$$t_c = \left[ C_1 A_r + C_2 \right] \left[ \frac{\eta}{\left( n^2 \cdot d_s \right)} \right], \tag{14}$$

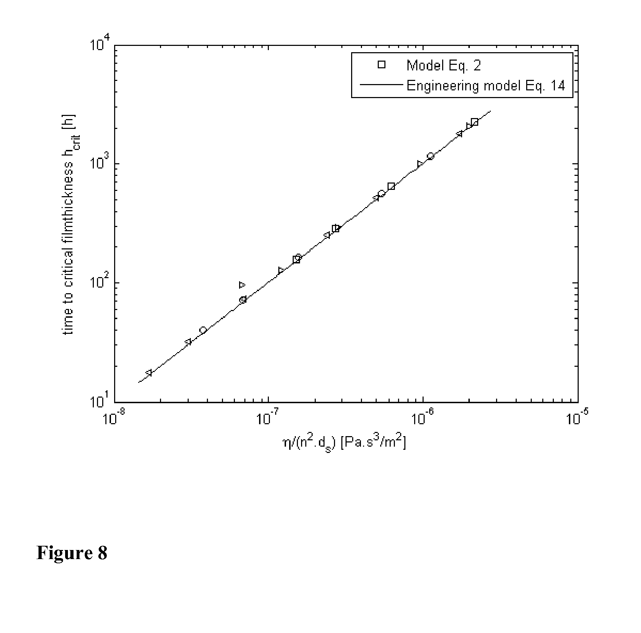

where for this particular grease type $C_1 = 2 \cdot 10^{15}$ and $C_2 = 6 \cdot 10^6$ and $A_r = WH_o$ provided that $H_o/W = 2$. The seal geometry is included in $d_s$, the base oil viscosity and temperature in $\eta$ and the rotational speed in $n$. The results of Eq. (14) are plotted as continuous lines in Figure 6 and Figure 7. Figure 8 shows how the results from the physical model in Figure 6 fall on one line when scaled with the characteristic term $\eta/(n^2 \cdot d_s)$.

A physical model to predict the lubricating conditions and film thickness in an axial sealing contact has been presented. Based on this model a simplified engineering model has been developed that can be used to predict the time until the mixed lubrication regime is reached. It is possible to include a more advanced pumping model including the actual seal lip geometry. However, when the pumping phase (phase 2) is short compared to the phase where the film thickness decays (phase 3) and the maximum film thickness is at least a few times higher than the critical film thickness, the pumping rate has little effect on the predicted time to mixed lubrication. Under these conditions the present engineering model is also valid for other axial seal materials and geometries. In addition, the model can be extended with e.g. a prediction of the grease reservoir formation and percolation theory for calculations below the critical film thickness, i.e. in the mixed lubrication regime.

In a further aspect, the present invention defines a condition monitoring system for a grease-lubricated seal, which is adapted to implement the engineering model expressed in Equation (14).

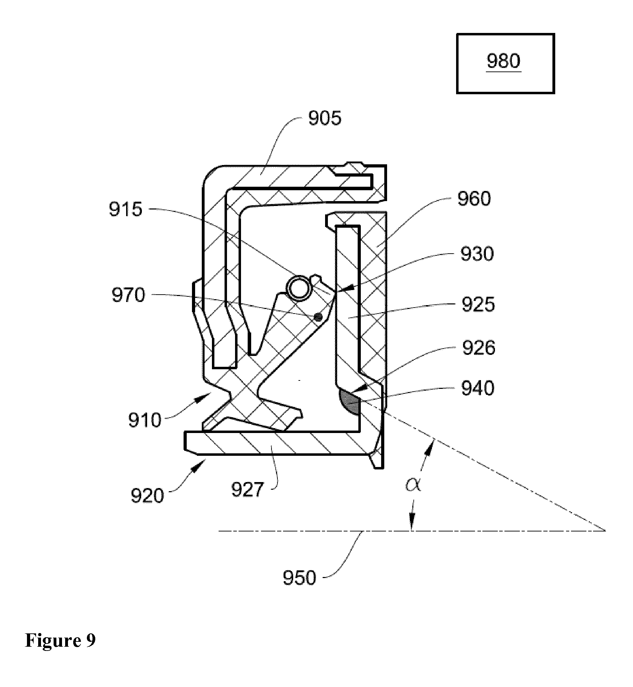

An example of a system according to the invention is shown in Figure 9. The system comprises a seal, which is suitable for use in a wheel bearing unit adapted for inner ring rotation. The inner ring rotates about an axis of rotation 950. The seal has an elastomeric body 910 bonded to a metal casing 905, which casing is e.g. press-fitted into a bore of the outer ring. The elastomeric body 910 has an axial sealing lip 915. The seal further comprises a slinger 920, which has a radial flange part 925 and a cylindrical part 927. The cylindrical part 927 is mounted on the bearing inner ring and the slinger 920 is thus rotational about the axis 250. In use of the bearing, a dynamic sealing contact 930 is defined between the axial sealing lip 915 and an axial counterface on the radial flange part 925. The seal is further provided with a grease reservoir 940 for supplying base oil to the sealing contact 930 under the action of centrifugal force. The reservoir 940 is provided on the rotating part of the seal, i.e. the slinger 920.

In the method of the invention, the cross-sectional area of the grease reservoir 940 is one of the key parameters for calculating the time at which the oil film separating the sealing contact 940 will reach a critical (inadequate) film thickness. For the slinger 120 depicted in Figure 1, the cross-sectional area may be estimated, based on the grease shear stress and based on measurements performed on sample seals after the churning phase. In a further development, as depicted in the example of Figure 9, the slinger may be designed to hold a predetermined volume of grease, to function as the grease reservoir 940. This not only enables a more accurate estimation of the cross-sectional area of the reservoir; the amount of grease in the reservoir can be increased. As explained above, this lengthens the time to critical film thickness and extends seal life.

In this example, the radial flange part 925 of the slinger has a bend located between the sealing contact 930 and the cylindrical slinger part 927. The flange part 925 therefore has an axially extending surface 926. This surface, which will be referred to as a retention surface, acts as an overhang for radially retaining the grease reservoir 940. Suitably, the retention surface 926 extends at an angle $\alpha$ of less than 40 degrees relative to the rotational axis 250. In the example of Figure 9, the angle is approximately 25 degrees. As a result, the centrifugal force acting on the grease reservoir 940 has a relatively small axial component, which is insufficient to allow sideways movement of the grease, but which allows side flow of base oil from the grease. Upon reaching the edge of the retention surface 926, the base oil will then flow in a radially outward direction towards the sealing contact 930.

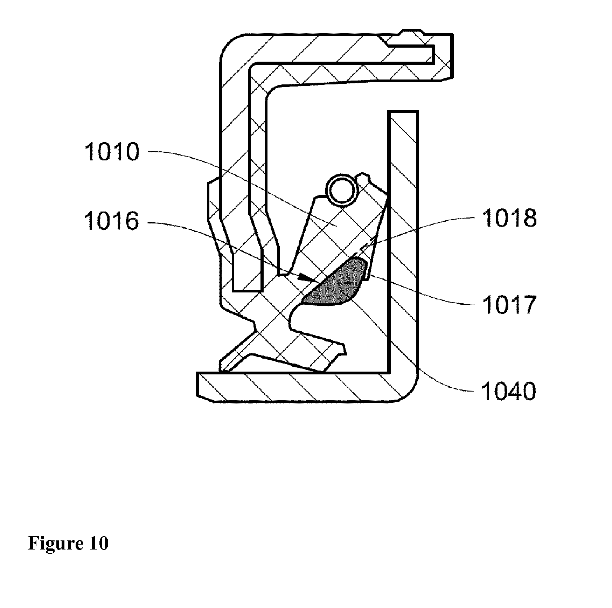

Other designs are possible. For example, an overhanging part may be molded to the slinger flange. To enhance the flow of oil from the grease reservoir retained by the overhang, radially extending channels may be provided in the moulding. Equivalent features may be moulded into the elastomeric body of a seal, when it is this part of the seal that is rotational in use. An example of such a seal is shown in Figure 10. The retention surface 1016 is formed on an axially extending part of the seal body 1010. The grease reservoir 1040 is further retained by an overhanging lip 1017, which is provided with grooves 1018 to allow the flow of base oil.

In the method of the invention, it is further necessary to determine the rotational speed of the rotating part and to determine the viscosity of the base oil that bleeds from the grease. In the example, depicted in Figure 9, an axially outer side of the slinger flange is provided with a magnetized rubber moulding 960. As the slinger rotates, the changing magnetic field is detected by e.g. a Hall sensor (not shown) that transmits its signal to a processing unit 980 (shown schematically). The rotational speed of the slinger is obtained from the Hall sensor signal.

To determine viscosity, the system further comprises a temperature sensor 970, which transmits a temperature signal to the processing unit 980. Viscosity is then calculated based on, for example, a look-up table of viscosity values at various temperatures for the base oil in the grease used. The temperature sensor 970 may be a thermocouple that is embedded in the elastomeric body 910, close to the axial sealing lip 815. An optical fiber sensor or any other suitable sensor may also be used.

The processing unit 980 is programmed to implement Equation (14) and calculate the time at which critical film thickness will be reached, based on the predetermined volume of the grease reservoir, the measured rotational speed and the oil viscosity determined from the measured temperature. Suitably, the processing unit is further programmed to issue a warning when the calculated time ($t_c$) falls below a minimum threshold.

Equation (14) may also be used to estimate the life of a particular seal, based on the expected operating conditions, such that the optimal seal may be selected for a particular application.

The invention is not to be regarded as being limited to the examples described above, a number of additional variants and modifications being possible within the scope of the subsequent patent claims.

Nomenclature

| | | |
|---|---|---|
| $A_r$ | Cross sectional area of grease reservoir | $m^2$ |
| $b$ | Seal contact width | m |
| $C_1$ | Constant | - |
| $C_2$ | Constant | - |
| $D_f$ | Soap fiber diameter | m |
| $d_s$ | Sealing contact diameter | m |
| $F_{body}$ | Specific body force | $N/m^3$ |
| $F_{lip}$ | Specific lip force | N/m |
| $f_o$ | Initial soap mass fraction | - |
| $G$ | Duty parameter | - |
| $H_o$ | Initial height of grease reservoir | m |
| $h$ | Film thickness | m |
| $h_{max}$ | Maximum film thickness | m |
| $k$ | Permeability | $m^2$ |
| $n$ | Rotational speed | $rev.min^{-1}$ |
| $\nabla p$ | Pressure gradient | Pa/m |
| $Q_{body}$ | Flow rate oil loss - body force | $m^3/s$ |
| $Q_{feed}$ | Flow rate oil feed | $m^3/s$ |
| $Q_{loss}$ | Flow rate oil loss | $m^3/s$ |
| $Q_{pump}$ | Flow rate oil loss - pumping | $m^3/s$ |
| $R_c$ | Radius axial contact | m |

(continued)

| | | |
|---|---|---|
| $R_o$ | Radius grease reservoir | m |
| $r$ | Radius | m |
| $t$ | Time | s |
| $U_r$ | Radial velocity | m/s |
| $V_o$ | Initial volume oil in contact | $m^3$ |
| $V_{oil}$ | Volume oil in contact | $m^3$ |
| $W$ | Width of grease reservoir | m |
| $\eta$ | Oil viscosity | Pa·s |
| $\eta_{40}$ | Base oil viscosity at 40°C | Pa·s |
| $\eta_{100}$ | Base oil viscosity at 100°C | Pa·s |
| $\rho$ | Grease density | $kg/m^3$ |
| $\omega$ | Angular velocity | rad/s |

**Claims**

1. A method of determining a time, $t_c$, at which an oil film separating a sliding contact interface (130, 930) between a counterface and an axial lip (115, 915) of a seal will reach a critical film thickness, $h_{crit}$, at which inadequate separation occurs, whereby
one of the axial lip and the counterface is provided on a rotational part (120, 920) of the seal and the other of the axial lip and the counterface is provided on a non-rotational part of the seal (910);
the seal is grease lubricated and the oil film is formed by base oil which bleeds from a grease reservoir (140, 940) on the rotational part of the seal and which flows towards the contact interface under the action of centrifugal force;
**characterized in that** the method comprises steps of

   a. determining a rotational speed of the rotational part of the seal,
   b. determining a viscosity of the base oil,
   c. determining the time, $t_c$, based on the rotational speed, the viscosity of the base oil, a cross-sectional area of the grease reservoir and a diameter of the contact interface.

2. The method according to claim 1, wherein the time, $t_c$, is determined according to the following relationship:

$$t_c = \left[ C_1 A_r + C_2 \right] \left[ \frac{\eta}{\left( n^2 \cdot d_s \right)} \right],$$

where

   $C_1$ is a first constant dependent on grease microstructure
   $C_2$ is a second constant dependent on grease microstructure
   $A_r$ is the cross-sectional area of the grease reservoir ($m^2$)
   $\eta$ is the viscosity of the base oil (Pa.s)
   $n$ is the rotational speed (rev.$min^{-1}$)
   $d_s$ is the diameter of the contact interface (m).

3. Method according to claim 2, wherein the relationship is based on a one-dimensional model of oil flow behaviour.

4. Method according to claim 2, wherein the relationship is based on a two-dimensional model of oil flow behaviour.

5. Method according to any of claims 2 - 4, wherein the constant $C_1$ has a value of between $1.10^{10}$ and $1.10^{20}$.

6. Method according to any of claims 2 - 5, wherein the constant $C_2$ has a value of between 0 and $1.10^{10}$.

7. The method according to any preceding claim, wherein the step of determining viscosity comprises measuring a temperature of the seal under dynamic sealing conditions, near to the sliding contact interface (130, 930).

8. Method according to any preceding claim, wherein the critical film thickness is equal to a surface roughness of the counterface.

9. Method according to claim 8, further comprising a step of measuring a roughness parameter of the counterface.

10. A condition monitoring system configured for implementing the method according to any of claims 1 to 9, the system comprising:

    • a seal comprising an axial lip (115, 915) in sliding contact with a counterface, where one of the axial lip and the counterface is provided on a rotational part of the seal and the other of the axial lip and the counterface is provided on a non-rotational part of the seal, the seal further comprising a grease reservoir (140, 940) on the rotational part;
    • means (960) to determine a rotational speed of the rotational part;
    • means (970) to determine a viscosity of a base oil that bleeds from the grease reservoir; and
    • processing means (980) programmed to determine the time, $t_c$, based on the rotational speed, the viscosity of the base oil, a cross-sectional area of the grease reservoir and a diameter of the sliding contact interface

11. The condition monitoring system according to claim 10, the system being further configured to issue an alarm when the determined time, $t_c$, falls below a predefined minimum value.

12. The condition monitoring system according to claim 10 or 11, wherein the rotational part of the seal comprises an axially extending retention surface (926, 1016) for radially retaining the grease reservoir (940, 1040).

13. The condition monitoring system according to claim 12, wherein the retention surface comprises radially extending channels or grooves (1018) for allowing the passage of base oil that bleeds from the grease reservoir (1040).

14. A seal life estimator for estimating an expected life of a grease-lubricated seal under dynamic sealing conditions, the seal having an axial lip (115, 915) in sliding contact with a counterface, wherein
one of the axial lip and the counterface is provided on a rotational part (120, 920) of the seal and the other of the axial lip and the counterface is provided on a non-rotational part (910) of the seal;
an oil film forms under dynamic sealing conditions, the oil film separating a sliding contact interface (130, 930) between the axial lip and the counterface; the oil film is formed by base oil, which bleeds from a grease reservoir (140, 940) on the rotational part of the seal and which flows towards the sliding contact interface under the action of centrifugal force;
**characterized in that**
the estimator comprises program means configured for estimating seal life based on a time, $t_c$, at which the oil film will reach a critical thickness at which inadequate separation of the sliding contact interface occurs, where the time, $t_c$, is calculated based on a rotational speed of the rotational part of the seal, a viscosity of the base oil, a cross-sectional area of the grease reservoir and a diameter of the sliding contact interface.

15. The seal life estimator of claim 15, wherein the time, $t_c$, is calculated according to the following relationship:

$$t_c = \left[ C_1 A_r + C_2 \right] \left[ \frac{\eta}{\left( n^2 \cdot d_s \right)} \right],$$

where

    $C_1$ is a first constant dependent on grease microstructure
    $C_2$ is a second constant dependent on grease microstructure
    $A_r$ is the cross-sectional area of the grease reservoir ($m^2$)
    $\eta$ is the viscosity of the base oil (Pa.s)
    $n$ is the rotational speed ($rev.min^{-1}$)
    $d_s$ is the diameter of the contact interface (m).

**Patentansprüche**

1. Verfahren zum Bestimmen eines Zeitpunkts $t_c$, zu dem ein Ölfilm, der eine Gleitkontaktverbindung (130, 930) zwischen einer Gegenlauffläche und einer axialen Lippe (115, 915) einer Dichtung trennt, eine kritische Filmdicke $h_{crit}$, bei der eine unzureichende Trennung eintritt, erreicht, wobei

   entweder die axiale Lippe oder die Gegenlauffläche auf einem Drehteil (120, 920) der Dichtung vorgesehen ist und die andere der axialen Lippe und der Gegenlauffläche auf einem Nichtdrehteil der Dichtung (910) vorgesehen ist; die Dichtung mit Schmierfett geschmiert wird und der Ölfilm durch Grundöl gebildet ist, das aus einem Schmierfettreservoir (140, 940) auf dem Drehteil der Dichtung ausläuft und das zu einer Kontaktverbindung unter der Wirkung der Zentrifugalkraft fließt;

   **dadurch gekennzeichnet, dass** das Verfahren die folgenden Schritte umfasst:

   a. Bestimmen einer Drehzahl des Drehteils der Dichtung,
   b. Bestimmen einer Viskosität des Grundöls,
   c. Bestimmen des Zeitpunkts $t_c$ anhand der Drehzahl, der Viskosität des Grundöls, einer Querschnittsfläche des Schmierfettreservoirs und eines Durchmessers der Kontaktverbindung.

2. Verfahren nach Anspruch 1, wobei der Zeitpunkt $t_c$ gemäß der folgenden Beziehung bestimmt wird:

$$t_c = \left[ C_1 A_r + C_2 \right] \left[ \frac{\eta}{\left( n^2 \cdot d_s \right)} \right],$$

   wobei

   $C_1$ eine erste Konstante ist, die von der Mikrostruktur des Schmierfetts abhängt,
   $C_2$ eine zweite Konstante ist, die von der Mikrostruktur des Schmierfetts abhängt,
   $A_r$ die Querschnittsfläche des Schmierfettreservoirs ist ($m^2$) ,
   $\eta$ die Viskosität des Grundöls ist (Pa·s),
   $n$ die Drehzahl ist ($min^{-1}$),
   $d_s$ der Durchmesser der Kontaktverbindung ist (m).

3. Verfahren nach Anspruch 2, wobei die Beziehung auf einem eindimensionalen Modell von Ölfließverhalten beruht.

4. Verfahren nach Anspruch 2, wobei die Beziehung auf einem zweidimensionalen Modell von Ölfließverhalten beruht.

5. Verfahren nach einem der Ansprüche 2-4, wobei die Konstante $C_1$ einen Wert zwischen $1 \cdot 10^{10}$ und $1 \cdot 10^{20}$ hat.

6. Verfahren nach einem der Ansprüche 2-5, wobei die Konstante $C_2$ einen Wert zwischen 0 und $1 \cdot 10^{10}$ hat.

7. Verfahren nach einem der vorhergehenden Ansprüche, wobei der Schritt des Bestimmens der Viskosität das Messen einer Temperatur der Dichtung unter dynamischen Dichtungsbedingungen in der Nähe der Gleitkontaktverbindung (130, 930) umfasst.

8. Verfahren nach einem der vorhergehenden Ansprüche, wobei die kritische Filmdicke gleich einer Oberflächenrauheit der Gegenlauffläche ist.

9. Verfahren nach Anspruch 8, das ferner einen Schritt des Messens eines Rauheitsparamters der Gegenlauffläche umfasst.

10. Zustandsbeobachtungssystem, das zum Implementieren des Verfahrens nach einem der Ansprüche 1 bis 9 konfiguriert ist, wobei das System Folgendes umfasst:

    • eine Dichtung, die eine axiale Lippe (115, 915) in Gleitkontakt mit einer Gegenlauffläche umfasst, wobei entweder die axiale Lippe oder die Gegenlauffläche auf einem Drehteil der Dichtung vorgesehen ist und die andere der axialen Lippe und der Gegenlauffläche auf einem Nichtdrehteil der Dichtung vorgesehen ist, wobei die Dichtung ferner ein Schmierfettreservoir (140, 940) auf dem Drehteil umfasst;
• Mittel (960) zum Bestimmen einer Drehzahl des Drehteils;
• Mittel (970) zum Bestimmen einer Viskosität eines Grundöls, das aus dem Schmierfettreservoir ausläuft; und
• Verarbeitungsmittel (980), die programmiert sind, den Zeitpunkt $t_c$ anhand der Drehzahl, der Viskosität des Grundöls, einer Querschnittsfläche des Schmierfettreservoirs und eines Durchmessers der Gleitkontaktverbindung zu bestimmen.

11. Zustandsbeobachtungssystem nach Anspruch 10, wobei das System ferner konfiguriert ist, einen Alarm auszugeben, wenn der bestimmte Zeitpunkt $t_c$ unter einen vorbestimmten Minimalwert fällt.

12. Zustandsbeobachtungssystem nach Anspruch 10 oder 11, wobei der Drehteil der Dichtung eine sich axial erstreckende Rückhaltefläche (926, 1016) zum radialen Zurückhalten des Schmierfettreservoirs (940, 1040) umfasst.

13. Zustandsbeobachtungssystem nach Anspruch 12, wobei die Rückhaltefläche sich radial erstreckende Kanäle oder Rillen (1018) zum Ermöglichen des Durchflusses des Grundöls, das aus dem Schmierfettreservoir (1040) ausläuft, umfasst.

14. Dichtungslebensdauerschätzer zum Schätzen einer erwarteten Lebensdauer einer mit Schmierfett geschmierten Dichtung unter dynamischen Dichtungsbedingungen, wobei die Dichtung eine axiale Lippe (115, 915) in Gleitkontakt mir einer Gegenlauffläche besitzt, wobei
entweder die axiale Lippe oder die Gegenlauffläche auf einem Drehteil (120, 920) der Dichtung vorgesehen ist und die andere der axialen Lippe und der Gegenlauffläche auf einem Nichtdrehteil der Dichtung (910) vorgesehen ist;
ein Ölfilm sich unter dynamischen Dichtungsbedingungen bildet, wobei der Ölfilm eine Gleitkontaktverbindung (130, 930) zwischen der axialen Lippe und der Gegenlauffläche trennt;
der Ölfilm durch Grundöl gebildet ist, das aus einem Schmierfettreservoir (140, 940) auf dem Drehteil der Dichtung ausläuft und das zu einer Kontaktverbindung unter der Wirkung von Zentrifugalkraft fließt;
**dadurch gekennzeichnet, dass**
der Schätzer Programmmittel umfasst, die zum Schätzen der Dichtungslebensdauer anhand eines Zeitpunkts $t_c$, zu dem der Ölfilm eine kritische Dicke erreicht, bei der unzureichende Trennung der Gleitkontaktverbindung auftritt, konfiguriert sind, wobei der Zeitpunkt $t_c$ anhand der Drehzahl des Drehteils der Dichtung, einer Viskosität des Grundöls, einer Querschnittsfläche des Schmierfettreservoirs und einem Durchmesser der Gleitkontaktverbindung berechnet wird.

15. Dichtungslebensdauerschätzer nach Anspruch 15, wobei der Zeitpunkt $t_c$ gemäß der folgenden Beziehung bestimmt wird:

$$t_c = \left[ C_1 A_r + C_2 \right] \left[ \frac{\eta}{\left( n^2 \cdot d_s \right)} \right],$$

wobei

$C_1$ eine erste Konstante ist, die von der Mikrostruktur des Schmierfetts abhängt,
$C_2$ eine zweite Konstante ist, die von der Mikrostruktur des Schmierfetts abhängt,
$A_r$ die Querschnittsfläche des Schmierfettreservoirs ist ($m^2$),
$\eta$ die Viskosität des Grundöls ist (Pa·s),
n die Drehzahl ist (Rpm),
$d_s$ der Durchmesser der Kontaktverbindung ist (m).

**Revendications**

1. Procédé de détermination d'un instant, $t_c$, auquel un film d'huile séparant une interface (130, 930) de contact glissant entre une portée et une lèvre axiale (115, 915) d'un joint atteindra une épaisseur critique de film, $h_{crit}$, à laquelle se produit un décollement inadéquat,
un élément parmi la lèvre axiale et la portée étant placé sur une partie tournante (120, 920) du joint et l'autre élément parmi la lèvre axiale et la portée étant placé sur une partie non tournante du joint (910) ;
le joint étant lubrifié à la graisse et le film d'huile étant formé par de l'huile de base qui suinte d'un réservoir (140, 940) de graisse sur la partie tournante du joint et qui s'écoule en direction de l'interface de contact sous l'action de la force centrifuge ; **caractérisé en ce que** le procédé comporte des étapes consistant à

    a. déterminer une vitesse de rotation de la partie tournante du joint,
    b. déterminer une viscosité de l'huile de base,
    c. déterminer l'instant $t_c$, d'après la vitesse de rotation, la viscosité de l'huile de base, une aire en section droite du réservoir de graisse et un diamètre de l'interface de contact.

**2.** Procédé selon la revendication 1, l'instant $t_c$ étant déterminé selon la relation suivante :

$$t_c = \left[ C_1 A_r + C_2 \right] \left[ \frac{\eta}{n_2 . d_s} \right]$$

où

C$_1$ est une première constante dépendant de la microstructure de la graisse
C$_2$ est une deuxième constante dépendant de la microstructure de la graisse
$A_r$ est l'aire en section droite du réservoir de graisse (m$^2$)
$\eta$ est la viscosité de l'huile de base (Pa.s)
n est la vitesse de rotation (t.min$^{-1}$)
$d_s$ est le diamètre de l'interface de contact (m).

**3.** Procédé selon la revendication 2, la relation étant basée sur un modèle unidimensionnel de comportement d'écoulement de l'huile.

**4.** Procédé selon la revendication 2, la relation étant basée sur un modèle bidimensionnel de comportement d'écoulement de l'huile.

**5.** Procédé selon l'une quelconque des revendications 2 à 4, la constante C1 ayant une valeur comprise entre $1.10^{10}$ et $1.10^{20}$.

**6.** Procédé selon l'une quelconque des revendications 2 à 5, la constante C2 ayant une valeur comprise entre 0 et $1.10^{10}$.

**7.** Procédé selon l'une quelconque des revendications précédentes, l'étape de détermination de la viscosité comportant la mesure d'une température du joint dans des conditions d'étanchéité dynamique, près de l'interface (130, 930) de contact glissant.

**8.** Procédé selon l'une quelconque des revendications précédentes, l'épaisseur critique de film étant égale à une rugosité de surface de la portée.

**9.** Procédé selon la revendication 8, comportant en outre une étape consistant à mesurer un paramètre de rugosité de la portée.

**10.** Système de surveillance de l'état configuré pour mettre en oeuvre le procédé selon l'une quelconque des revendications 1 à 9, le système comportant :

    • un joint comportant une lèvre axiale (115, 915) en contact glissant avec une portée, un élément parmi la lèvre axiale et la portée étant placé sur une partie tournante du joint et l'autre élément parmi la lèvre axiale et la portée étant placé sur une partie non tournante du joint, le joint comportant en outre un réservoir (140, 940) de graisse sur la partie tournante ;
    • un moyen (960) servant à déterminer une vitesse de rotation de la partie tournante ;

• un moyen (970) servant à déterminer une viscosité d'une huile de base qui suinte du réservoir de graisse ; et
• un moyen (980) de traitement programmé pour déterminer l'instant $t_c$, d'après la vitesse de rotation, la viscosité de l'huile de base, une aire en section droite du réservoir de graisse et un diamètre de l'interface de contact glissant.

11. Système de surveillance de l'état selon la revendication 10, le système étant en outre configuré pour émettre une alarme lorsque l'instant déterminé, $t_c$, tombe en-dessous d'une valeur minimale prédéfinie.

12. Système de surveillance de l'état selon la revendication 10 ou 11, la partie tournante du joint comportant une surface (926, 1016) de retenue s'étendant axialement pour retenir radialement le réservoir (940, 1040) de graisse.

13. Système de surveillance de l'état selon la revendication 12, la surface de retenue comportant des gouttières ou rainures (1018) s'étendant radialement pour permettre le passage de l'huile de base qui suinte du réservoir (1040) de graisse.

14. Estimateur de durée de vie de joints destiné à estimer une durée de vie prévisionnelle d'un joint lubrifié à la graisse dans des conditions d'étanchéité dynamique, le joint étant doté d'une lèvre axiale (115, 915) en contact glissant avec une portée,
un élément parmi la lèvre axiale et la portée étant placé sur une partie tournante (120, 920) du joint et l'autre élément parmi la lèvre axiale et la portée étant placé sur une partie non tournante (910) du joint ;
un film d'huile se formant dans des conditions d'étanchéité dynamique, le film d'huile séparant une interface (130, 930) de contact glissant entre la lèvre axiale et la portée ;
le film d'huile étant formé par l'huile de base, qui suinte d'un réservoir (140, 940) de graisse sur la partie tournante du joint et qui s'écoule en direction de l'interface de contact glissant sous l'action de la force centrifuge ;
**caractérisé en ce que**
l'estimateur comporte un moyen de programme configuré pour estimer la durée de vie d'un joint d'après un instant $t_c$ auquel le film d'huile atteindra un épaisseur critique à laquelle se produit un décollement inadéquat de l'interface de contact glissant, l'instant $t_c$ étant calculé d'après une vitesse de rotation de la partie tournante du joint, une viscosité de l'huile de base, une aire en section droite du réservoir de graisse et un diamètre de l'interface de contact glissant.

15. Estimateur de durée de vie de joints selon la revendication 14, l'instant $t_c$ étant calculé selon la relation suivante :

$$t_c = \left[ C_1 A_r + C_2 \right] \left[ \frac{\eta}{n_2 . d_s} \right]$$

où

$C_1$ est une première constante dépendant de la microstructure de la graisse
$C_2$ est une deuxième constante dépendant de la microstructure de la graisse
$A_r$ est l'aire en section droite du réservoir de graisse (m$^2$)
$\eta$ est la viscosité de l'huile de base (Pa.s)
n est la vitesse de rotation (t.min$^{-1}$)
$d_s$ est le diamètre de l'interface de contact (m).

Figure 1

(a)

Figure 2a

(b)

Figure 2b

Figure 3

Figure 4

**Figure 5**

**Figure 6**

**Figure 7**

**Figure 8**

**Figure 9**

1010

1016

1018

1017

1040

**Figure 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Oil-bleeding model for lubricating grease based on viscous flow through a porous microstructure. *Trib. Trans.,* 2010, vol. 53, 340-348
- **DEKKER M.** *Shaft seals for dynamic applications,* 1996, 338-339
- **BAART.** Oil-bleeding model for lubricating grease based on viscous flow through a porous microstructure. *Trib. Trans.,* 2010, vol. 53, 340-348
- **HORVE.** *Shaft seals for dynamic applications,* 1996